# EUROPEAN PATENT SPECIFICATION

(11) **EP 3 139 114 B1**
(45) Date of publication and mention of the grant of the patent: **16.02.2022**
(21) Application number: 15195630.7
(22) Date of filing: 20.11.2015
(51) Int. Cl.: F25B 41/31

(54) **EXPANSION VALVE FOR A VEHICLE AIR-CONDITIONING SYSTEM AND VEHICLE AIR-CONDITIONING SYSTEM INCLUDING THE SAME**
EXPANSIONSVENTIL FÜR KLIMAANLAGE FÜR EIN FAHRZEUG UND FAHRZEUGKLIMAANLAGE DAMIT
SOUPAPE DE DÉTENTE D'UN SYSTÈME DE CLIMATISATION DE VÉHICULE ET SYSTÈME DE CLIMATISATION DE VÉHICULE COMPRENANT CELUI-CI

(30) Priority: 28.08.2015 KR 20150121847
(43) Date of publication of application: 08.03.2017
(73) Proprietor: Hyundai Motor Company, Seoul 137-938 (KR)
(72) Inventor: OH, Dong Seok, Gyeonggi-do (KR)
(74) Representative: Viering, Jentschura & Partner mbB Patent- und Rechtsanwälte

(56) References cited:
- EP-A1- 1 600 841
- EP-A2- 1 001 229
- JP-A- H07 232 541
- JP-A- 2000 241 048
- JP-A- 2004 324 936
- KR-A- 20090 016 821
- KR-A- 20130 134 760
- US-A- 5 243 829

## Description

### BACKGROUND

### (a) Field of the Invention

The present invention relates to an expansion valve of an air conditioning system for a vehicle, more particularly, to an expansion valve that can be installed in an air conditioning system to which an external variable compressor mounted to the vehicle is applied.

### (b) Description of the Related Art

An air conditioning unit of a vehicle is a device that controls a temperature and humidity in an interior of the vehicle, and includes a heater for heating and an air conditioner for cooling. The heater receives heat from a vehicle engine coolant and increases a temperature of the interior of the vehicle.

Meanwhile, the air conditioner circulates a heat exchanging media, for example, a fluid through a condenser, an expansion valve, an evaporator, and a compressor, and absorbs heat from an interior air using evaporation latent heat of the fluid to thereby decrease an interior temperature of the vehicle. Here, the expansion valve controls the amount of fluid that flows into the evaporator from the condenser according to a temperature of the fluid discharged from the evaporator.

An existing expansion valve generally includes a diaphragm. The diaphragm changes a pressure according to temperature, and is more expensive than other parts. In addition, the existing expansion valve is formed to operate based on an internal pressure, a pressure at an outlet of the evaporator, and an elastic force of a spring. Therefore, three control variables must be considered in the design of the existing expansion value. Further, hunting may occur between control valves due to a control variable difference with a control valve of an external variable compressor.

Documents KR 2009 0016821 A, KR 2013 0134760 A, US 5 243 829 A, EP 1 001 229 A2, and JP 2004 324936 A each disclose an expansion valve of an air conditioning system for a vehicle, comprising a body member having first and second paths, a movement member receiving a pressure of the first path and opening/closing the second path, and an elastic member elastically supporting the movement member in a direction of the first path. From EP 1 600 841 A1 an expansion valve according to the preamble of claim 1 is known.

The above information disclosed in this Background section is only for enhancement of understanding of the background of the invention and therefore it may contain information that does not form the prior art that is already known in this country to a person of ordinary skill in the art.

### SUMMARY

The present invention aims at providing an expansion valve of an air conditioning system of a vehicle, to which an external variable compressor that can reduce manufacturing costs is applied.

Further, an exemplary embodiment of the present invention aims at providing an expansion valve of an air conditioning system for a vehicle, which can improve operation reliability.

According to the present invention, this is achieved by an expansion valve of an air conditioning system for a vehicle and by an air conditioning system for a vehicle according to the features of claims 1 and 6, respectively. Advantageous further embodiments are described in the subclaims.

Unlike an existing expansion valve, since the expansion valve of the vehicle air conditioning system according to the exemplary embodiment of the present invention does not include a diaphragm, a production cost can be saved as much as a cost of the diaphragm.

Further, the expansion valve of the vehicle air conditioning system according to the exemplary embodiment of the present invention can be designed only in consideration of a force F applied to the upper surface of the piston unit and an elastic force S of the elastic member. Therefore, a coolant flow amount of the air conditioning system can be controlled only by a variable of a pressure (force) so that the variable of the pressure of the valve and a control variable of a flow amount control valve of an external variable compressor can be unified, thereby preventing system hunting.

### BRIEF DESCRIPTION OF THE DRAWINGS

FIG. 1 is a perspective view of an air conditioning system of a vehicle according to an exemplary embodiment of the present invention.
FIG. 2 is a cross-sectional view of FIG. 1, taken along the line II-II.
FIG. 3 shows an interior of an expansion valve of the air conditioning system.
FIG. 4 is a schematic view of an operation mechanism of the expansion valve of the air conditioning system.
FIG. 5 is a schematic view depicting a state in which a movement member descends, and thus an orifice portion of a second path is opened.

### DETAILED DESCRIPTION OF THE EMBODIMENTS

The present invention will be described more fully hereinafter with reference to the accompanying drawings, in which exemplary embodiments of the invention are shown. As those skilled in the art would realize, the described embodiments may be modified in various different ways, all without departing from the scope of the present invention, defined by the appended claims.

The drawings and description are to be regarded as illustrative in nature and not restrictive. Like reference numerals designate like elements throughout the specification.

Further, in exemplary embodiments, since like reference numerals designate like elements having the same configuration, a first exemplary embodiment is representatively described, and in other exemplary embodiments, only configurations that differ from the first exemplary embodiment will be described.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Throughout the specification, unless explicitly described to the contrary, the word "comprise" and variations such as "comprises" or "comprising" will be understood to imply the inclusion of stated elements but not the exclusion of any other elements. In addition, the terms "unit", "-er", "-or", and "module" described in the specification mean units for processing at least one function and operation, and can be implemented by hardware components or software components and combinations thereof.

Further, the control logic of the present invention may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

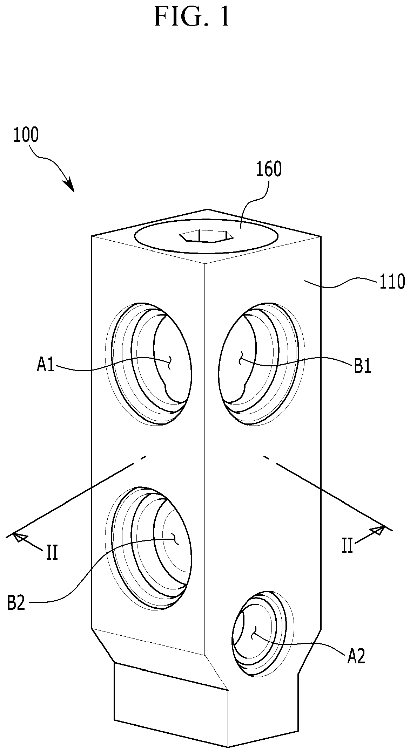

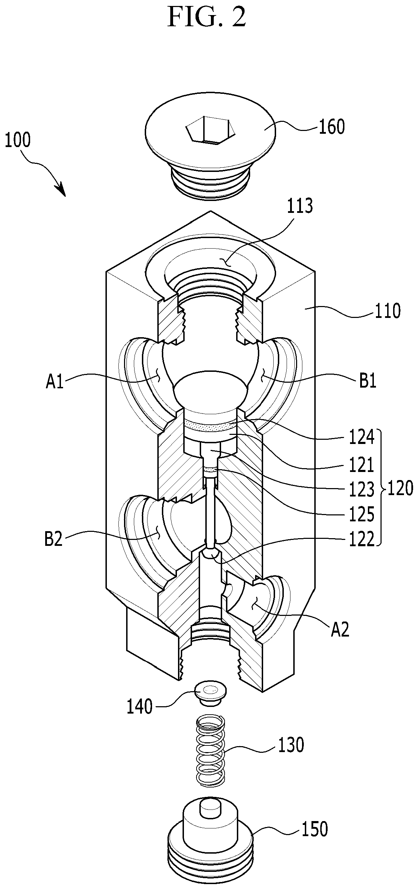

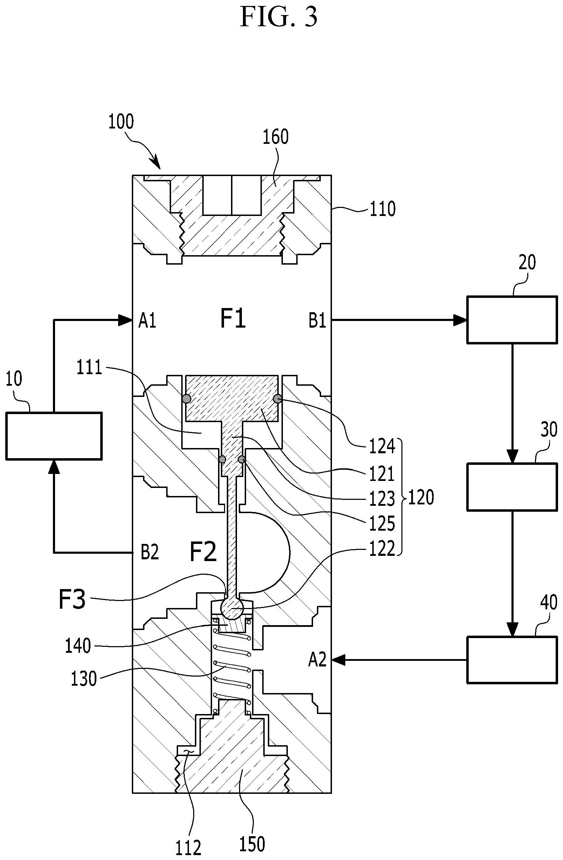

FIG. 1 is a perspective view of an expansion valve of a vehicle air conditioning system according to an exemplary embodiment of the present invention, FIG. 2 is a cross-sectional view of FIG. 1, taken along the line II-II, and FIG. 3 shows an interior of the expansion valve of the vehicle air conditioning system.

Referring to FIG. 1 to FIG. 3, an expansion valve 100 of a vehicle air conditioning system according to an exemplary embodiment of the present invention includes a body member 110, a movement member 120 and an elastic member 130.

The movement member 120 and the elastic member 130 are provided in the body member 110.

A first path F1 and a second path F2 that are separate from each other are formed in the body member 110. The second path F2 may be arranged downward from the first path F1. A first inlet A1 and a first outlet B1 may be formed in the first path F1. A second inlet A2 and a second outlet B2 may be formed in the second path F2.

The movement member 120 is provided to be movable in a predetermined direction within the body member 110. The movement member 120 may be, for example, vertically movable in the body member 110.

One end of the movement member 120 is exposed to the first path F1 and receives a pressure of the fluid flowing through the first path F1. The end of the movement member 120 is provided to open/close the second path F2.

The elastic member 130 is provided to elastically support a lower side of the movement member 120. The elastic member 130 may be, for example, a compression coil spring.

In the expansion valve 100 of the vehicle air conditioning system, formed with such a structure according to the exemplary embodiment of the present invention, the movement member 120 ascends or descends due to a difference between an internal pressure of the first path F1 and an elastic force of the elastic member 130 such that the second path F2 is closed or opened.

Hereinafter, a detailed structure of the expansion valve of the vehicle air conditioning system according to the exemplary embodiment of the present invention will be described.

An orifice unit F3 may be formed in a part of the second path F2. The shape of the second path F2 may be bent at least one time. The orifice unit F3 may be formed in at least one bent portion of the second path F2. The orifice unit F3 may be smaller than an interior diameter of the second path F2.

Such an orifice unit F3 can be opened or closed according to movement of the movement member 120. As the orifice unit F3 is opened or closed, movement of the fluid through the second path F2 may be controlled.

The body member 110 may include a cylinder unit 111. The cylinder unit 111 is communicated with the first path F1 and may be formed perpendicular to the first path F1. The cylinder unit 111 may be communicated with the second path F2.

The body member 110 further includes a stopper member 160, and a process hole 113 may further be formed in the body member 110. The process hole 113 may be formed above the body member 110.

The process hole 113 may be communicated with the first path F1. The process hole 113 may be a space for entrance of a tool for forming the cylinder unit 111 in the body member 110.

The stopper member 160 may close and seal the process hole 113. After the cylinder unit 111 is processed, the stopper member 160 may be combined to the process hole 113. The stopper member 160 prevents the fluid flowing through first path F1 from being leaked to the outside.

The movement member 120 may include a piston unit 121, an opening unit 122, and a connection unit 123.

The piston unit 121 is received in the cylinder unit 111. The piston unit 121 may be vertically reciprocally movable along the cylinder unit 111. The pressure of the fluid flowing through the first path F1 may be applied to an upper surface of the piston unit 121.

The opening unit 122 is formed with a diameter that is greater than an interior diameter of the orifice unit F3 to open/close the orifice unit F3. The opening unit 122 may, for example, have a sphere shape. The diameter of the sphere-shaped opening unit 122 may be greater than the interior diameter of the orifice unit F3 such that the opening unit 122 can stably open/close the orifice unit F3.

The connection unit 123 connects the piston unit 121 and the opening unit 122. The connection unit 123 may, for example, have a pillar shape. One end of the connection unit 123 may be fixed to the piston unit 121 and the other end (i.e., another end, or the opposite end) may be fixed to the opening unit 122. The connection unit 123, the piston unit 121, and the opening unit 122 may be integrally or separately formed.

The expansion valve 100 of the vehicle air conditioning system according to the exemplary embodiment of the present invention may further include an adhering member 140.

The adhering member 140 is provided between the opening unit 122 and the elastic member 130. The shape of the adhering member 140 may, for example, have a shape that a lower side of the adhering member 140 can be combined to an upper side of the elastic member 130. In addition, the shape of the upper side of the adhering member 140 may be recessed from an upper direction to a lower direction so as to enable a part of the opening unit 122 to be received in the adhering member 140. The adhering member 140 enables stable transmission of an elastic force of the elastic member 130 to the movement member 120.

A penetration hole 112 may be formed in the body member 110. The penetration hole 112 is formed in a lower portion of the body member 110.

The expansion valve 100 of the vehicle air conditioning system may further include an elasticity control member 150. The elasticity control member 150 is screw-combined to the penetration hole 112. The elastic member 130 is expanded or compressed by rotation of the elasticity control member 150.

For example, when the elasticity control member 150 rotates and thus moves upward, the elastic member 130 may be compressed in a length direction. On the contrary, the elasticity control member 150 rotates to the opposite direction and thus moves downward, the elastic member 130 may expand along the length direction.

In the expansion valve 100 of the vehicle air conditioning system according to the exemplary embodiment of the present invention, the orifice unit F3 may be opened and closed due to a difference from a resultant force of a force generated when a pressure of the fluid moving through the first path F1 is applied to the upper surface of the piston unit 121 and the elastic force of the elastic member 130.

Meanwhile, in a process for manufacturing the expansion valve 100 of the vehicle air conditioning system, the elastic member 130 may be appropriately tuned so as to compress the elastic member 130 by a force applied to the piston unit 121.

As described above, the elastic force of the elastic member 130 may be easily changed by the elasticity control member 150. Thus, although the elastic member 130 cannot be precisely tuned, the elastic force of the elastic member 130 can be controlled by the elasticity control member 150.

Further, when tuning of the elastic member 130 is not properly performed and thus the elastic member 130 cannot be used, the elastic member 130 can be promptly replaced with another elastic member 130 by separating the elasticity control member 150 from the body member 110. That is, the elasticity control member 150 enable simple replacement of the elastic member 130.

Meanwhile, the movement member 120 may further include a first sealing member 124.

The first sealing member 124 partially surrounds the piston unit 121. The first sealing member 124 seals between the piston unit 121 and the cylinder unit 111 to prevent inflow of the fluid moving along the first path F1 to the second path F2.

The movement member 120 may further include a second sealing member 125.

The second sealing member 125 partially surrounds the connection unit 123. The second sealing member 125 seals between a space where the connection unit 123 is installed and the connection unit 123 to prevent inflow of the fluid moving along the second path F2 to the first path F1.

Since the first path F1 and the second path F2 are stably closed by the first sealing member 124 and the second sealing member 125, the expansion valve 100 of the vehicle air conditioning system according to the exemplary embodiment of the present invention can be prevented from malfunctioning.

Hereinafter, an operation process of the expansion valve 100 of the vehicle air conditioning system formed with the above structure will be described.

First, the vehicle air conditioning system includes an evaporator 10, a compressor 20, a condenser 30, a storage container 40, and the expansion valve 100.

The evaporator 10 evaporates a coolant gas. The coolant gas evaporated by heat absorbing reaction in the evaporator 10 is moved to the compressor 20.

The compressor 20 compresses the coolant gas evaporated in the evaporator 10 to a gas state. That is, the coolant gas is compressed to a high-temperature high-pressure gas state and moved to the condenser 30.

The condenser 30 is connected to the compressor 20 to condense the coolant gas into a liquid state by cooling the coolant gas. That is, when the high-temperature high-pressure coolant gas is forcibly cooled, a state change occurs and thus the high-temperature high-pressure coolant gas is changed to a high-pressure liquid coolant gas and moved to the storage container 40.

The storage container 40 is connected with the condenser 30 and thus the coolant gas is stored in the storage container 40.

The expansion valve 100 make the storage container 40 and the evaporator 10 communicate with each other, and the evaporator 10 and the compressor 20 communicate with each other. The expansion valve 100 converts the coolant gas stored in the storage container 40 into a spray state. The expansion valve 100 drops a pressure by performing throttling for easy evaporation of the high-pressure coolant gas in the storage container 40, and accordingly the coolant gas is converted into a spray state. The spray-state coolant moves to the evaporator 10 and then generates cooling effect from heat absorbing effect.

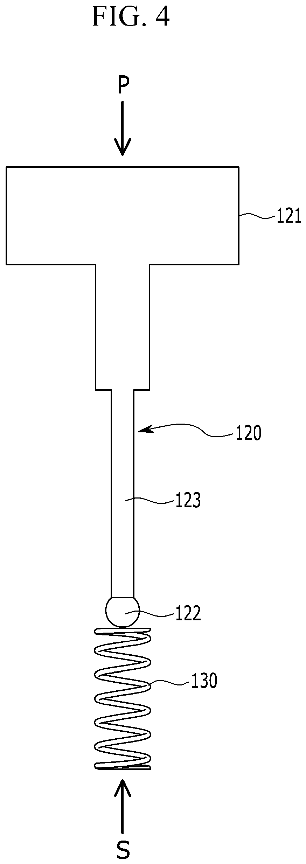

FIG. 4 is provided for description of an operation mechanism of the expansion valve of the vehicle air conditioning system.

As shown in FIG. 4, two forces are applied to operation of the expansion valve 100 of the vehicle air conditioning system according to the exemplary embodiment of the present invention. The two forces include an elastic force S from the elastic member 130 and a force F applied to the upper surface of the piston unit 121 by the internal pressure of the first path F1.

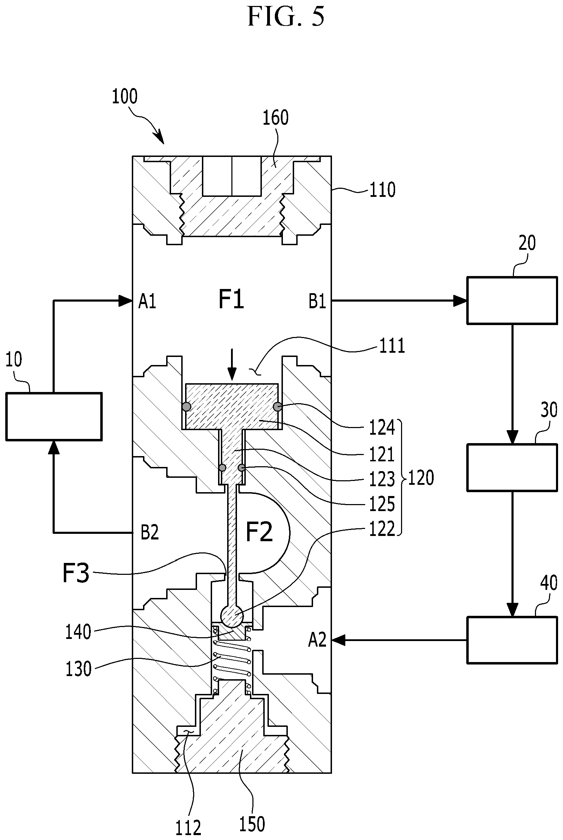

FIG. 5 shows a state in which the movement member descends, and thus the orifice unit of the second path is opened.

Referring to FIG. 5, an outlet of the evaporator 10 provided in the air conditioning system is connected to the first inlet A1 of the first path F1, and an inlet of the evaporator 10 is connected to the second outlet B2 of the second path F2. In addition, an outlet of the compressor 20 provided in the air conditioning system is connected to the first outlet B1 of the first path F1 and an outlet of the storage container 40 is connected to the second inlet A2 of the second path F2.

First, when the air conditioning system does not operate, the force F applied to the upper surface of the piston unit 121 by the internal pressure of the first path F1 is greater than the elastic force S of the elastic member 130. In this state, the movement member 120 descends, and thus the orifice unit F3 is opened.

When the air conditioning system operates, the coolant moves to the compressor 20 from the evaporator 10, and thus the internal pressure of the first path F1 is decreased. In this case, as shown in FIG. 3, due to a pressure at the outlet of the evaporator 10, the force F applied to the upper surface of the piston unit 121 is weaker than the elastic force S of the elastic member 130.

Thus, the movement member 120 moves upward, and the opening unit 122 closes the orifice unit F3.

When the air conditioning system continuously operates, the orifice unit F3 is stopped, and the internal pressure of the first path F1 increases again, and accordingly, the opening unit 122 is opened again.

As the internal pressure of the first path F1 is changed while the air conditioning system continuously operates, the movement member 120 ascends or descends such that the opening unit 122 opens or closes the orifice unit F3. That is, the amount of fluid that flows into the evaporator 10 from the condenser 30 can be automatically controlled by the expansion valve 100.

The expansion valve 100 of the vehicle air conditioning system according to the exemplary embodiment of the present invention includes the body member 110, the movement member 120, and the elastic member 130. With such a structure, the second path F2 may be opened or closed as the movement member 120 moves due to a difference between an internal pressure of the first path F1 and an elastic force of the elastic member 130.

Unlike an existing expansion valve, since the expansion valve 100 of the vehicle air conditioning system according to the exemplary embodiment of the present invention does not include a diaphragm, a production cost at least equivalent to the cost of the diaphragm can be saved.

Further, the expansion valve 100 of the vehicle air conditioning system according to the exemplary embodiment of the present invention can be designed only in consideration of a force F applied to the upper surface of the piston unit 121 and an elastic force S of the elastic member 130. Therefore, a coolant flow amount of the air conditioning system can be controlled only by a variable of a pressure (force) so that the variable of the pressure of the valve and a control variable of a flow amount control valve of an external variable compressor can be unified, thereby preventing system hunting.

The drawings referred to in the above and disclosed detailed description of the present invention only illustrate the present invention, and are intended to describe the present invention, not to restrict the meanings or limit the scope of the present invention claimed in the claims. Therefore, those skilled in the art can understand that various modifications and other equivalent exemplary embodiment may be made therefrom. Accordingly, the true technical protection scope of the present invention must be determined by the technical content of the accompanying claims.

## Claims

1. An expansion valve for a vehicle air conditioning system, comprising:
a body member (110) where a first path (F1) and a second path (F2) that are separate from each other are formed;
a movement member (120) combined to be movable in a predetermined direction in the body member (110), one end of the movement member (120) being exposed to the first path (F1) and receiving a pressure of the first path (F1) and another end opening/closing the second path (F2); and
an elastic member (130) provided to elastically support the movement member (120) in a direction of the first path (F1),
wherein as the movement member (120) ascends or descends due to a difference between an internal pressure of the first path (F1) and an elastic force (S) of the elastic member (130), the second path (F2) is closed or opened, wherein an orifice unit (F3) is formed on the second path (F2),
the body member (110) comprises a cylinder unit (111) communicated with the first path (F1), and
the movement member (120) comprises:
a piston unit (121) received in the cylinder unit (111),
an opening unit (122) formed with a diameter that is greater than an interior diameter of the orifice unit (F3) to open/close the orifice unit (F3), and
a connection unit (123) connecting the piston unit (121) and the opening unit (122),
**characterized in that**
the expansion valve does not include a diaphragm so that the orifice unit (F3) may be opened and closed due to a difference from a resultant force of only a force (F) generated when a pressure of the fluid moving through the first path (F1) is applied to the upper surface of the piston unit (121) and the elastic force (S) of the elastic member (130).

2. The expansion valve for a vehicle air conditioning system of claim 1, further comprising an adhering member (140) provided between the opening unit (122) and the elastic member (130).

3. The expansion valve for a vehicle air conditioning system of claim 1 or 2, wherein the movement member (120) further comprises a first sealing member (124) surrounding the piston unit (121).

4. The expansion valve for a vehicle air conditioning system of anyone of claims 1-3, wherein the movement member (120) further comprises a second sealing member (125) surrounding the connection unit (123).

5. The expansion valve for a vehicle air conditioning system of anyone of claims 1-4, wherein a penetration hole (112) is formed in a lower portion of the body member (110), and the expansion valve comprises an elasticity control member (150) supporting the elastic member (130) and screw-combined to the penetration hole (112) to control elasticity of the elastic member (130) according to a combination location.

6. An air conditioning system for a vehicle, comprising:
an evaporator (10) evaporating a coolant gas;
a compressor (20) compressing the coolant gas evaporated in the evaporator (10) to a gas state;
a condenser (30) connected to the compressor (20) and condensing the coolant gas to a liquid state by cooling the coolant gas;
a storage container (40) connected to the condenser (30) and storing the coolant gas; and
an expansion valve (100) connecting the storage container (40) and the evaporator (10), connecting the evaporator (10) and the compressor (20), and converting the coolant gas stored in the storage container (40) to a spray state,
wherein the expansion valve (100) comprises:
a body member (110) where a first path (F1) that communicates the evaporator (10) and the compressor (20) and a second path (F2) that communicates the storage container (40) and the evaporator (10) are formed;
a movement member (120) combined to be movable in a predetermined direction in the body member (110), one end of the movement member (120) being exposed to the outside and receiving a pressure of the first path (F1) and another end opening/closing the second path (F2); and
an elastic member (130) provided to elastically support the movement member (120) in a direction of the first path (F1),
wherein as the movement member (120) ascends or descends due to a difference between an internal pressure of the first path (F1) and an elastic force (S) of the elastic member (130), the second path (F2) is closed or opened, wherein an orifice unit (F3) is formed on the second path (F2),
the body member (110) comprises a cylinder unit (111) communicated with the first path (F1), and
the movement member (120) comprises:
a piston unit (121) received in the cylinder unit (111),
an opening unit (122) formed with a diameter that is greater than an interior diameter of the orifice unit (F3) to open/close the orifice unit (F3), and
a connection unit (123) connecting the piston unit (121) and the opening unit (122),
**characterized in that**
the expansion valve does not include a diaphragm so that the orifice unit (F3) may be opened and closed due to a difference from a resultant force of only a force (F) generated when a pressure of the fluid moving through the first path (F1) is applied to the upper surface of the piston unit (121) and the elastic force (S) of the elastic member (130).

7. The air conditioning system of claim 6, further comprising an adhering member (140) provided between the opening unit (122) and the elastic member (130).

8. The air conditioning system of claim 6 or 7, wherein the movement member (120) further comprises a first sealing member (124) surrounding the piston unit (121).

9. The air conditioning system of anyone of claims 6-8, wherein the movement member (120) further comprises a second sealing member (125) surrounding the connection unit (123).

10. The air conditioning system of anyone of claims 6-9, wherein a penetration hole (112) is formed in a lower portion of the body member (110), and the expansion valve (100) comprises an elasticity control member (150) supporting the elastic member (130) and screw-combined to the penetration hole (112) to control elasticity of the elastic member (130) according to a combination location.

## Patentansprüche

1. Expansionsventil für ein Fahrzeug-Klimaanlagensystem, aufweisend:
ein Gehäuseelement (110), in dem ein erster Pfad (F1) und ein zweiter Pfad (F2), die voneinander getrennt sind, ausgebildet sind;
ein Bewegungselement (120), das so kombiniert ist, dass es in einer vorbestimmten Richtung in dem Gehäuseelement (110) beweglich ist, wobei ein Ende des Bewegungselements (120) dem ersten Pfad (F1) ausgesetzt ist und einen Druck des ersten Pfads (F1) aufnimmt und ein anderes Ende den zweiten Pfad (F2) öffnet/schließt; und
ein elastisches Element (130), das vorgesehen ist, um das Bewegungselement (120) in einer Richtung des ersten Pfads (F1) elastisch zu stützen,
wobei der zweite Pfad (F2) geschlossen oder geöffnet wird, wenn das Bewegungselement (120) aufgrund einer Differenz zwischen einem Innendruck des ersten Pfads (F1) und einer elastischen Kraft (S) des elastischen Elements (130) ansteigt oder absinkt,
wobei an dem zweiten Pfad (F2) eine Öffnungseinheit (F3) ausgebildet ist,
wobei das Gehäuseelement (110) eine Zylindereinheit (111) aufweist, die mit dem ersten Pfad (F1) kommuniziert, und
wobei das Bewegungselement (120) aufweist:
eine Kolbeneinheit (121), die in der Zylindereinheit (111) aufgenommen ist,
eine Durchlasseinheit (122), die mit einem Durchmesser ausgebildet ist, der größer ist als ein innerer Durchmesser der Öffnungseinheit (F3), um die Öffnungseinheit (F3) zu öffnen/zu schließen, und
eine Verbindungseinheit (123), die die Kolbeneinheit (121) und die Öffnungseinheit (122) verbindet,
**dadurch gekennzeichnet, dass**
das Expansionsventil keine Membran enthält, so dass die Öffnungseinheit (F3) geöffnet und geschlossen werden kann aufgrund einer Differenz aus einer resultierenden Kraft von nur einer Kraft (F), die erzeugt wird, wenn ein Druck des sich durch den ersten Weg (F1) bewegenden Fluids auf die obere Fläche der Kolbeneinheit (121) ausgeübt wird, und der elastischen Kraft (S) des elastischen Elements (130).

2. Expansionsventil für ein Fahrzeug-Klimaanlagensystem nach Anspruch 1, ferner aufweisend ein Haftelement (140) zwischen der Durchlasseinheit (122) und dem elastischen Element (130).

3. Expansionsventil für ein Fahrzeug-Klimaanlagensystem nach Anspruch 1 oder 2, wobei das Bewegungselement (120) ferner ein erstes Dichtungselement (124) aufweist, das die Kolbeneinheit (121) umgibt.

4. Expansionsventil für ein Fahrzeug-Klimaanlagensystem nach irgendeinem der Ansprüche 1-3, wobei das Bewegungselement (120) ferner ein zweites Dichtungselement (125) aufweist, das die Verbindungseinheit (123) umgibt.

5. Expansionsventil für ein Fahrzeug-Klimaanlagensystem nach irgendeinem der Ansprüche 1-4, wobei ein Durchgangsloch (112) in einem unteren Abschnitt des Gehäuseelements (110) ausgebildet ist und das Expansionsventil ein Elastizitätssteuerelement (150) aufweist, das das elastische Element (130) stützt und mit dem Durchgangsloch (112) verschraubt ist, um die Elastizität des elastischen Elements (130) gemäß einer Kombinationsposition zu steuern.

6. Klimaanlagensystem für ein Fahrzeug, aufweisend:
einen Verdampfer (10), der ein Kühlmittelgas verdampft;
einen Kompressor (20), der das im Verdampfer (10) in einen gasförmigen Zustand verdampfte Kühlmittelgas verdichtet;
einen Kondensator (30), der mit dem Kompressor (20) verbunden ist und der das Kühlmittelgas durch Abkühlung des Kühlmittelgases in einen flüssigen Zustand kondensiert;
einen Speicherbehälter (40), der mit dem Kondensator (30) verbunden ist und der das Kühlgas speichert; und
ein Expansionsventil (100), das den Speicherbehälter (40) und den Verdampfer (10) verbindet, das den Verdampfer (10) und den Kompressor (20) verbindet und das das im Speicherbehälter (40) gespeicherte Kühlmittelgas in einen Sprühzustand umwandelt,
wobei das Expansionsventil (100) aufweist:
ein Gehäuseelement (110), in dem ein erster Pfad (F1), der den Verdampfer (10) und den Kompressor (20) verbindet, und ein zweiter Pfad (F2), der den Speicherbehälter (40) und den Verdampfer (10) verbindet, ausgebildet sind;
ein Bewegungselement (120), das so kombiniert ist, dass es in einer vorbestimmten Richtung in dem Gehäuseelement (110) beweglich ist, wobei ein Ende des Bewegungselements (120) nach außen frei liegt und einen Druck des ersten Pfads (F1) aufnimmt und ein anderes Ende den zweiten Pfad (F2) öffnet/schließt; und
ein elastisches Element (130), das vorgesehen ist, um das Bewegungselement (120) in einer Richtung des ersten Pfades (F1) elastisch zu stützen,
wobei der zweite Pfad (F2) geschlossen oder geöffnet wird, wenn das Bewegungselement (120) aufgrund einer Differenz zwischen einem Innendruck des ersten Pfads (F1) und einer elastischen Kraft (S) des elastischen Elements (130) ansteigt oder absinkt,
wobei an dem zweiten Pfad (F2) eine Öffnungseinheit (F3) ausgebildet ist,
wobei das Gehäuseelement (110) eine Zylindereinheit (111) aufweist, die mit dem ersten Pfad (F1) verbunden ist, und
wobei das Bewegungselement (120) aufweist:
eine Kolbeneinheit (121), die in der Zylindereinheit (111) aufgenommen ist,
eine Durchlasseinheit (122), die mit einem Durchmesser ausgebildet ist, der größer ist als ein innerer Durchmesser der Öffnungseinheit (F3), um die Öffnungseinheit (F3) zu öffnen/zu schließen, und
eine Verbindungseinheit (123), die die Kolbeneinheit (121) und die Durchlasseinheit (122) verbindet,
**dadurch gekennzeichnet, dass**
das Expansionsventil keine Membran enthält, so dass die Öffnungseinheit (F3) geöffnet und geschlossen werden kann aufgrund einer Differenz aus einer resultierenden Kraft von nur einer Kraft (F), die erzeugt wird, wenn ein Druck des sich durch den ersten Weg (F1) bewegenden Fluids auf die obere Fläche der Kolbeneinheit (121) ausgeübt wird, und der elastischen Kraft (S) des elastischen Elements (130).

7. Klimaanlagensystem nach Anspruch 6, ferner aufweisend ein Haftelement (140), das zwischen der Durchlasseinheit (122) und dem elastischen Element (130) vorgesehen ist.

8. Klimaanlagensystem nach Anspruch 6 oder 7, wobei das Bewegungselement (120) ferner ein erstes Dichtungselement (124) aufweist, das die Kolbeneinheit (121) umgibt.

9. Klimaanlagensystem nach einem der Ansprüche 6 bis 8, wobei das Bewegungselement (120) ferner ein zweites Dichtungselement (125) aufweist, das die Verbindungseinheit (123) umgibt.

10. Klimaanlagensystem nach einem der Ansprüche 6 bis 9, wobei ein Durchgangsloch (112) in einem unteren Abschnitt des Gehäuseelements (110) ausgebildet ist und das Expansionsventil (100) ein Elastizitätssteuerelement (150) aufweist, das das elastische Element (130) stützt und das mit dem Durchgangsloch (112) verschraubt ist, um die Elastizität des elastischen Elements (130) entsprechend einer Kombinationsposition zu steuern.

## Revendications

1. Soupape d'expansion d'un système de climatisation d'un véhicule, comprenant :
un élément corps (110) dans lequel sont formés un premier chemin (F1) et un second chemin (F2) qui sont séparés l'un de l'autre ;
un élément de déplacement (120) combiné pour être mobile dans une direction prédéterminée dans l'élément corps (110), une extrémité de l'élément de déplacement (120) étant exposée au premier chemin (F1), et recevant une pression du premier chemin (F1), et une autre extrémité qui ouvre / ferme le second chemin (F2) ; et
un élément élastique (130) prévu afin de supporter de manière élastique l'élément de déplacement (120) dans la direction du premier chemin (F1),
dans laquelle, lorsque l'élément de déplacement (120) monte ou descend en raison d'une différence entre la pression interne du premier chemin (F1) et la force élastique (S) de l'élément élastique (130), le second chemin (F2) est fermé ou ouvert,
dans laquelle une unité orifice (F3) est formée sur le second chemin (F2),
l'élément corps (110) comprend une unité cylindre (111) qui communique avec le premier chemin (F1), et
l'élément de déplacement (120) comprend :
une unité piston (121) reçue dans l'unité cylindre (111),
une unité d'ouverture (122) formée avec un diamètre qui est supérieur au diamètre intérieur de l'unité orifice (F3) afin d'ouvrir / de fermer l'unité orifice (F3), et
une unité de connexion (123) qui connecte l'unité piston (121) et l'unité d'ouverture (122),
**caractérisée en ce que**
la soupape d'expansion ne comprend pas de diaphragme de telle sorte que l'unité orifice (F3) puisse être ouverte et fermée en raison de la différence entre une force résultante d'une force seulement (F) générée lorsque la pression du fluide qui se déplace dans le premier chemin (F1) est appliquée à la surface supérieure de l'unité piston (121), et la force élastique (S) de l'élément élastique (130).

2. Soupape d'expansion pour un système de climatisation d'un véhicule selon la revendication 1, comprenant en outre un élément adhésif (140) disposé entre l'unité d'ouverture (122) et l'élément élastique (130).

3. Soupape d'expansion pour un système de climatisation d'un véhicule selon la revendication 1 ou 2, dans laquelle l'élément de déplacement (120) comprend en outre un premier élément d'étanchéité (124) qui entoure l'unité piston (121).

4. Soupape d'expansion pour un système de climatisation d'un véhicule selon l'une quelconque des revendications 1 à 3, dans laquelle l'élément de déplacement (120) comprend en outre un second élément d'étanchéité (125) qui entoure l'unité de connexion (123).

5. Soupape d'expansion pour un système de climatisation d'un véhicule selon l'une quelconque des revendications 1 à 4, dans laquelle un trou de pénétration (112) est formé dans une partie inférieure de l'élément corps (110), et la soupape d'expansion comprend un élément de commande d'élasticité (150) qui supporte l'élément élastique (130) et qui est associé par vis au trou de pénétration (112) afin de commander l'élasticité de l'élément élastique (130) selon un emplacement d'association.

6. Système de climatisation d'un véhicule, comprenant :
un évaporateur (10) qui évapore un fluide frigorigène gazeux ;
un compresseur (20) qui comprime le fluide frigorigène gazeux évaporé dans l'évaporateur (10), dans un état gazeux ;
un condenseur (30) connecté au compresseur (20), et qui condense le fluide frigorigène gazeux dans un état liquide en refroidissant le fluide frigorigène gazeux ;
un contenant de stockage (40) connecté au condenseur (30), et qui stocke le fluide frigorigène gazeux ; et
une soupape d'expansion (100) qui connecte le contenant de stockage (40) et l'évaporateur (10), qui connecte l'évaporateur (10) et le compresseur (20), et qui convertit le fluide frigorigène gazeux stocké dans le contenant de stockage (40) en un état de pulvérisation,
dans lequel la soupape d'expansion (100) comprend :
un élément corps (110) dans lequel sont formés un premier chemin (F1) qui fait communiquer l'évaporateur (10) et le compresseur (20), et un second chemin (F2) qui fait communiquer le contenant de stockage (40) et l'évaporateur (10);
un élément de déplacement (120) combiné pour être mobile dans une direction prédéterminée dans l'élément corps (110), une extrémité de l'élément de déplacement (120) étant exposée à l'extérieur, et recevant une pression du premier chemin (F1), et une autre extrémité qui ouvre / ferme le second chemin (F2) ; et
un élément élastique (130) prévu afin de supporter de manière élastique l'élément de déplacement (120) dans la direction du premier chemin (F1),
dans lequel, lorsque l'élément de déplacement (120) monte ou descend en raison d'une différence entre la pression interne du premier chemin (F1) et la force élastique (S) de l'élément élastique (130), le second chemin (le F2) est fermé ou ouvert,
dans lequel une unité orifice (F3) est formée sur le second chemin (F2),
l'élément corps (110) comprend une unité cylindre (111) qui communique avec le premier chemin (F1), et
l'élément de déplacement (120) comprend :
une unité piston (121) reçue dans l'unité cylindre (111),
une unité d'ouverture (122) formée avec un diamètre qui est supérieur au diamètre intérieur de l'unité orifice (F3) afin d'ouvrir / de fermer l'unité orifice (F3), et
une unité connexion (123) qui connecte l'unité piston (121) et l'unité d'ouverture (122),
**caractérisé en ce que**
la soupape d'expansion ne comprend pas de diaphragme de telle sorte que l'unité orifice (F3) puisse être ouverte et fermée en raison de la différence entre une force résultante d'une force seulement (F) générée lorsque la pression du fluide qui se déplace dans le premier chemin (F1) est appliquée à la surface supérieure de l'unité piston (121), et la force élastique (S) de l'élément élastique (130).

7. Système de climatisation selon la revendication 6, comprenant en outre un élément adhésif (140) disposé entre l'unité d'ouverture (122) et l'élément élastique (130).

8. Système de climatisation selon la revendication 6 ou 7, dans lequel l'élément de déplacement (120) comprend en outre un premier élément d'étanchéité (124) qui entoure l'unité piston (121).

9. Système de climatisation selon l'une quelconque des revendications 6 à 8, dans lequel l'élément de déplacement (120) comprend en outre un second élément d'étanchéité (125) qui entoure l'unité de connexion (123).

10. Système de climatisation selon l'une quelconque des revendications 6 à 9, dans lequel un trou de pénétration (112) est formé dans une partie inférieure de l'élément corps (110), et la soupape d'expansion (100) comprend un élément de commande d'élasticité (150) qui supporte l'élément élastique (130) et qui est associé par vis au trou de pénétration (112) afin de commander l'élasticité de l'élément élastique (130) selon un emplacement d'association.
